# EUROPÄISCHE PATENTANMELDUNG

(11) **EP 1 273 854 A2**
(43) Veröffentlichungstag der Anmeldung: **08.01.2003**
(21) Anmeldenummer: 02014298.0
(22) Anmeldetag: 27.06.2002
(51) Int. Cl.: F24J 2/05, F24J 2/46

(54) **Solarkollektor**

(30) Priorität: 05.07.2001 DE 10132639
(71) Anmelder: Schütz GmbH & Co. KGaA, 56242 Selters (DE)
(72) Erfinder: Schütz, Udo, 56242 Selters /Ww. (DE)
(74) Vertreter: Pürckhauer, Rolf, Dipl.-Ing.

(57) **Zusammenfassung**

Der Solarkollektor (1) wird durch an das Gehäuse (6) einer Verteiler-Sammlereinheit (2) angeschlossene Kollektorröhren (3) zum Erwärmen eines fluiden Medium, insbesondere Wasser gebildet. Die Kollektorröhren (3) weisen einen Adapter (4) mit einem Drehverschluß nach Art eines Bajonettverschlusses (5) zum Anschließen der Röhren an einen Verteilerkanal (7) und einen Sammelkanal (8) des Gehäuses (6) der Verteiler-Sammlereinheit (2) und mit einer Drehverstellbarkeit zum Ausrichten der Kollektorröhren (3) nach der Sonnenstrahlung auf.

## Beschreibung

Die Erfindung betrifft einen Solarkollektor mit an das Gehäuse einer Verteiler-Sammlereinheit angeschlossenen Kollektorröhren zum Erwärmen eines fluiden Mediums, insbesondere Wasser.

Die als Vakuumröhren ausgebildeten Kollektorröhren eines aus der DE 198 21 137 A1 bekannten gattungsgemäßen Solarkollektors bestehen aus einem äußeren Hüllrohr aus Borosilicatglas, dessen untere Mantelhälfte auf der Rohrinnenseite mit einer Reflektorbeschichtung aus Silber versehen ist, einem in der unteren Mantelhälfte des Hüllrohres angeordneten Absorberrohr aus Borosilicatglas mit einer Absorptionsbeschichtung und einem in das Absorberrohr eingesetzten Zuleitungsrohr für das zu erwärmende fluide Medium, insbesondere Wasser. Das Hüllrohr ist mit seinem durch einen Deckel verschlossenen Ende in eine entsprechende Öffnung einer Verteiler-Sammlereinheit aus Kunststoff eingesteckt und mit dieser verklebt. Das andere geschlossene Ende des Hüllrohres sitzt in einer entsprechenden Öffnung einer Fußbefestigung und ist mit dieser verklebt. Das Gehäuse der Verteiler-Sammlereinheit ist durch eine Trennwand in einen Verteilerkanal für die kalte Flüssigkeit und einen Sammelkanal für die erwärmte Flüssigkeit unterteilt. Das Zuleitungsrohr für die kalte Flüssigkeit ist in eine in den Verteilerkanal führende Durchgangsbohrung in der Trennwand zwischen Verteilerkanal und Sammelkanal eingesetzt und mit der Trennwand verklebt, durchquert den Sammelkanal der Verteiler-Sammlereinheit und erstreckt sich durch das Absorberrohr bis in den Bereich des geschlossenen Endes des Absorberrohres. Das Absorberrohr ist mit seinem offenen Ende in eine in den Sammelkanal mündende Bohrung in der Gehäusewand der Verteiler-Sammlereinheit eingesetzt und mit dieser verklebt, ragt durch eine Öffnung des Verschlußdeckels des Hüllrohres in dieses hinein und erstreckt sich mit seinem geschlossenen Ende bis in den Bereich des geschlossenen Endes des über einen Stutzen in seinem Verschlußdeckel evakuierten Hüllrohres. Die zu erwärmende Flüssigkeit bzw. das Wärmeträgermedium fließt vom Verteilerkanal der Verteiler-Sammlereinheit durch das Zuleitungsrohr in das Absorberrohr, wird dort erwärmt und strömt in den Sammelkanal der Verteiler-Sammlereinheit zurück.

Der bekannte Röhrenkollektor kann in Modulbauweise in Gebäudedächer eingebaut und an Gebäudewänden angebracht werden, wobei in Abhängigkeit von den Einbauverhältnissen und der veranschlagten Wärmeleistung Module mit gleicher und unterschiedlicher Röhrenzahl zum Einsatz kommen und die einzelnen Module einer Solarkollektoranlage in Reihe hintereinander geschaltet werden.

Ein wesentlicher Nachteil des Solarkollektors nach der DE 198 21 137 A1 ist darin zu sehen, daß die Kollektormodule in Abhängigkeit von den Einbauverhältnissen nur im begrenzten Maß nach der Sonnenstrahlung ausgerichtet werden können, um eine möglichst hohe Wärmeleistung zu erzielen. Ferner ist der Einbau der Module aufwendig, da die Module je nach Größe entsprechend sperrig sind, so daß deren Transport zum Einbauort umständlich ist.

Der Erfindung liegt die Aufgabe zugrunde, einen Solarkollektor zu entwickeln, der sich durch eine einfache Montage auszeichnet und dessen Kollektorröhren im Hinblick auf einen größtmöglichen Wärmeertrag unabhängig von den jeweiligen Einbauverhältnissen optimal nach der Sonnentstrahlung ausgerichtet werden können.

Diese Aufgabe ist erfindungsgemäß gelöst durch einen Solarkollektor mit den Merkmalen des Patentanspruchs 1.

Die Unteransprüche beinhalten Vorteile und zweckmäßige Weiterbildungen der Erfindung.

Der erfindungsgemäße Solarkollektor zeichnet sich durch folgende Vorteile aus:

Die Kollektorröhren können am Einbauort einzeln mittels eines Bajonettverschlusses auf einfache Weise an das Gehäuse einer Verteiler-Sammlereinheit des Solarkollektors angeschlossen werden und im Hinblick auf einen optimalen Wirkungsgrad des Kollektors mittels einer Dreheinstellung über einen bestimmten Winkelbereich nach der Sonnenstrahlung ausgerichtet werden. Durch die Möglichkeit der Einzelmontage der Kollektorröhren gestaltet sich der Einbau des Solarkollektors in fertiggestellte Dächer einfach, da die Einzelteile des Solarkollektors von einem Monteur auf das Dach transportiert und dort zusammengebaut werden können. Ferner können die Solarkollektoren in Modulbauweise erstellt werden, wobei die vormontierten Kollektorenmodule beim Einbau in großflächige Dächer beispielsweise von Industriebauten mittels eines Hebezeugs, insbesondere mit einem Kran zur Einbaustelle auf das Dach transportiert werden können.

Die Erfindung ist nachfolgend anhand von Zeichnungsfiguren erläutert, die folgendes darstellen:
- Fig. 1: eine perspektivische Darstellung eines Solarkollektors,
- Fig. 2: eine ausschnittsweise perspektivische Darstellung des Solarkollektors nach Fig. 1, die
- Fign. 3a und 3b: einen Querschnitt der Verteiler-Sammlereinheit des Solarkollektors mit einer Längsschnittdarstellung einer angeschlossenen Kollektorröhre und die
- Fign. 4a und 4b: die Montage einer Kollektorröhre.

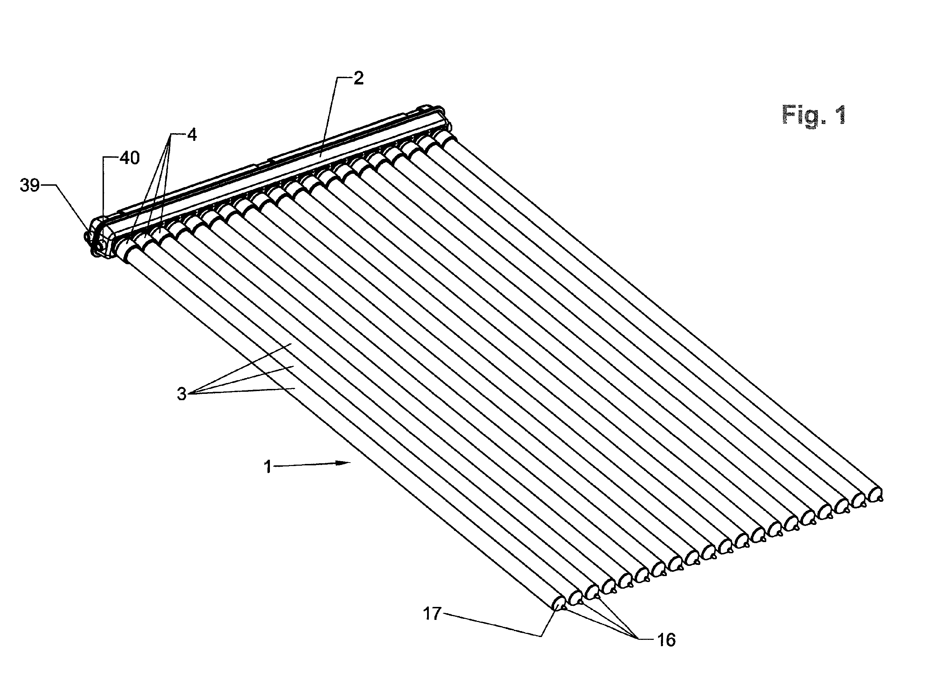

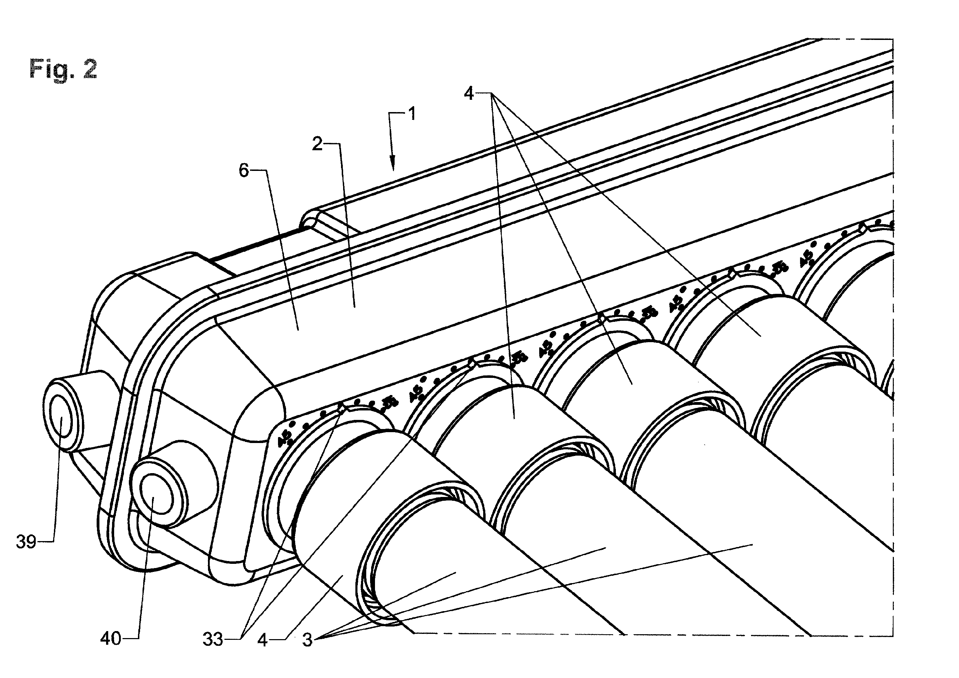

Der Solarkollektor 1 nach den Figuren 1 bis 3 besteht aus einer Verteiler-Sammlereinheit 2 sowie einer Anzahl von an die Verteiler-Sammlereinheit angeschlossenen Kollektorröhren 3 zum Erwärmen eines fluiden Mediums wie Wasser.

Die Kollektorröhren 3 weisen einen Adapter 4 aus Messing mit einem Drehverschluß nach Art eines Bajonettverschlusses 5 zum Anschließen der Röhren an einen Verteilerkanal 7 und einen Sammelkanal 8 des Gehäuses 6 aus Metall der Verteiler-Sammlereinheit 2 auf und sind zum Ausrichten nach der Sonnenstrahlung in dem Gehäuse 6 der Verteiler-Sammlereinheit 2 drehverstellbar gelagert.

In den äußeren Anschlußstutzen 9 des zylindrischen Adapters 4 ist eine Kollektorröhre 3 eingesetzt, mit dem Stutzen 9 und dem massiven Adapterkörper 4a verklebt und mit einem Dichtring 10 gegen den Stutzen 9 abgedichtet.

Die als Vakuumröhre ausgebildete Kollektorröhre 3 besteht aus einem für das Sonnenlicht durchlässigen äußeren, geschlossenen Hüllrohr 11 aus Borosilicatglas mit einer im unteren Rohrbereich 12 auf die Rohrinnenseite aufgebrachten Reflektorbeschichtung 13 aus Silber, einem parallel zu und in dem Hüllrohr 11 angeordneten Absorberrohr 14, das einteilig mit dem Hüllrohr 11 ausgebildet und aus Borosilicatglas hergestellt ist und auf der Außenseite mit einer selektiven Absorptionsbeschichtung versehen ist, sowie einem koaxial zu und in dem Absorberrohr 14 angeordneten Zuleitungsrohr 15 für die zu erwärmende Flüssigkeit.

Das Hüllrohr 11 der Kollektorröhre 3 wird über einen Stutzen 16, der an dem dem Adapter 4 abgewandten Rohrende 17 angeformt ist, evakuiert und mit einem Edelgas, z.B. Xenon gefüllt. Durch das Vakuum und die Gasfüllung wird die Reflektorbeschichtung 13 auf der Innenseite des Hüllrohres 11 geschützt. Der Stutzen 16 des Hüllrohres 11 wird nach dem Evakuieren und dem Befüllen des Rohres mit Edelgas abgeklemmt bzw. abgeschmolzen.

Das Zuleitungsrohr 15 der Kollektorröhre 3 ist in einen Durchgangskanal 18 des Adapters 4 eingesetzt und an den Verteilerkanal 7 der Verteiler-Sammeleinheit 2 angeschlossen. Der Durchgangskanal 18 des Adapters 4 weist einen inneren Kanalabschnitt 18a auf, in den bzw. dem das innere Ende 15a des Zuleitungsrohres 15 eingeklebt und mittels Dichtringen 19 abgedichtet ist, ferner einen gegenüber dem inneren Kanalabschnitt 18a erweiterten mittleren Kanalabschnitt 18b, der über eine Abzweigbohrung 20 mit dem Sammelkanal 8 der Verteiler-Sammeleinheit 2 in Verbindung steht, soweit einen gegenüber dem mittleren Kanalabschnitt 18b erweiterten äußeren Kanalabschnitt 18c.

In das innere Ende 14a des Absorberrohres 14 des Adapters 4 ist eine Rohrhülse 21 eingesetzt, die sich in den äußeren Kanalabschnitt 18c des Durchgangskanals 18 des Adapters 4 erstreckt.

Das äußere Ende 15b des Zuleitungsrohres 15 mündet in den äußeren geschlossenen Abschnitt 22 des Absorberrohres 14.

Der von dem Absorberrohr 14 und dem Zuleitungsrohr 15 gebildete Ringkanal 23 steht über den Ringkanal 24, der von der Rohrhülse 21 und dem mittleren Abschnitt 18b des Durchgangskanals 18 einerseits und dem Zuleitungsrohr 15 andererseits gebildet wird, sowie die Abzweigbohrung 20 mit dem Sammelkanal 8 der Verteiler-Sammlereinheit 2 des Solarkollektors 1 in Verbindung.

Der Adapter 4 durchsetzt den Sammelkanal 8 im Gehäuse 6 der Verteiler-Sammlereinheit 2 und ist in eine Öffnung 26 in der Trennwand 25 zwischen Verteilerkanal 7 und Sammelkanal 8 der Verteiler-Sammlereinheit 2 drehbar eingesetzt und mittels eines Dichtringes 27 gegen die Trennwand 25 abgedichtet.

Der Adapter 4 ist mit seinem mittleren Abschnitt 28 in eine entsprechende Öffnung 30 in der Außenwand 29 des Gehäuses 6 der Verteiler-Sammlereinheit 2 eingesetzt, gegen die Außenwand 29 mittels eines Dichtringes 31 abgedichtet, mit einem Bajonettverschluß 5 in der Außenwand 29 der Verteiler-Sammlereinheit 2 herausnehmbar befestigt und zum Ausrichten der Kollektorröhre 3 nach der Sonnenstrahlung über einen Winkelbereich von ± 45 Grad drehbar.

Am Umfang der Einstecköffnungen 30 für die Adapter 4 mit den Kollektorröhren 3 sind auf der Außenwand 29 des Gehäuses 6 der Verteiler-Sammlereinheit 2 Winkelskalen 32 angebracht, und an den Adaptern 4 ist eine nach den Winkelskalen 30 einstellbare Nase 33 angebracht.

Für die Drehverstellung der Kollektorröhren 3 können die zylindrischen Adapter 4 auf einem Teilbereich des Außenumfangs Handhaben zum Ansetzen eines Werkzeugs aufweisen.

Abweichend von der beschriebenen Ausführungsform des Solarkollektors 1 können das Gehäuse 6 der Verteiler-Sammlereinheit 2 und die Adapter 4 aus Kunststoff hergestellt werden.

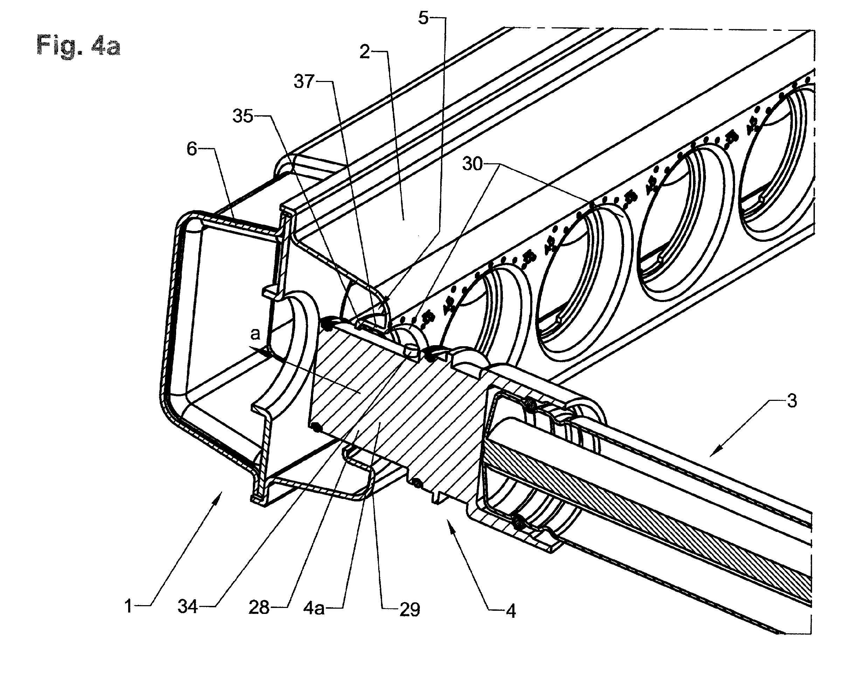

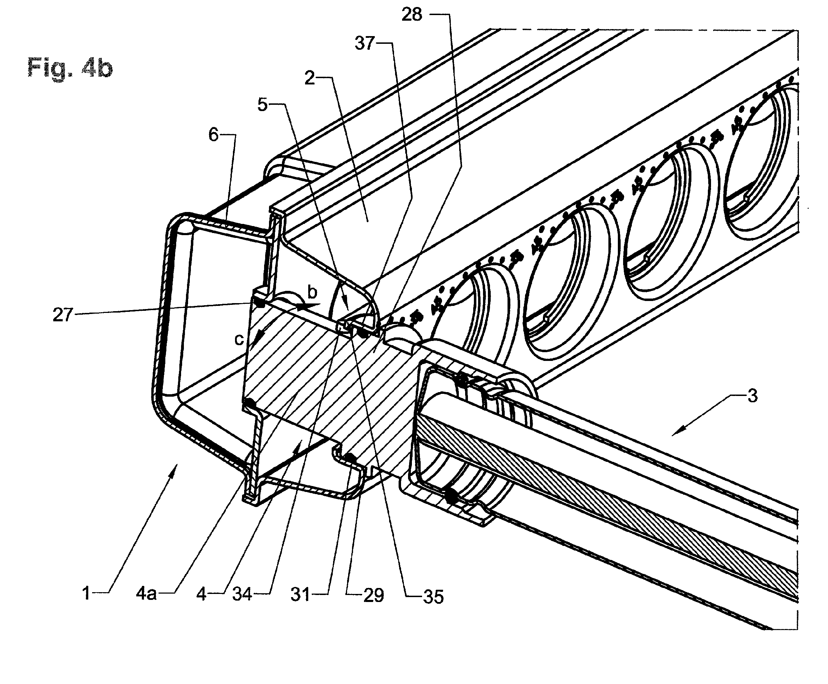

Der Bajonettverschluß 5 des Adapters 4 der Kollektorröhren 3 wird durch einen an den mittleren Abschnitt 28 des Adapters 4 angeformten Nocken 34 gebildet, der sich gemäß Figur 4a beim Einstecken des Adapters 4 einer Kollektorröhre 3 in Pfeilrichtung a in eine Öffnung 30 in der Außenwand 29 des Gehäuses 6 der Verteiler-Sammlereinheit 2 durch eine nicht dargestellte Öffnung eines nach innen gezogenen Ringrandes 35 eines am Innenrand 36 der Einstecköffnung 30 angeformten Ringansatzes 37 durch den Ringrand 35 schiebt und beim anschließenden Verdrehen des Adapters 4 zusammen mit der Kollektorröhre 3 in Pfeilrichtung b gemäß Figur 4b hinter den Ringrand 35 gleitet, wobei durch die von den Dichtringen 27 und 31 ausgeübte Klemmwirkung der Adapter 4 mit der Kollektorröhre 3 in dem Gehäuse 6 der Verteiler-Sammlereinheit 2 gegen unbeabsichtigtes Verdrehen gesichert wird.

Durch Verdrehen des Adapters 4 in Pfeilrichtung b, c kann die Kollektorröhre 3 auf die Sonnenstrahlung ausgerichtet werden, wobei bei der Einstellung der Kollektorröhre 3 immer ein Dichtsitz des Adapters 4 in der Gehäusewand 29 der Verteiler-Sammlereinheit 2 durch den an dem Ringansatz 37 der Gehäusewand 29 anliegenden Dichtring 31 gewährleistet ist, der in eine Ringnut 38 des Adapters 4 eingelegt ist.

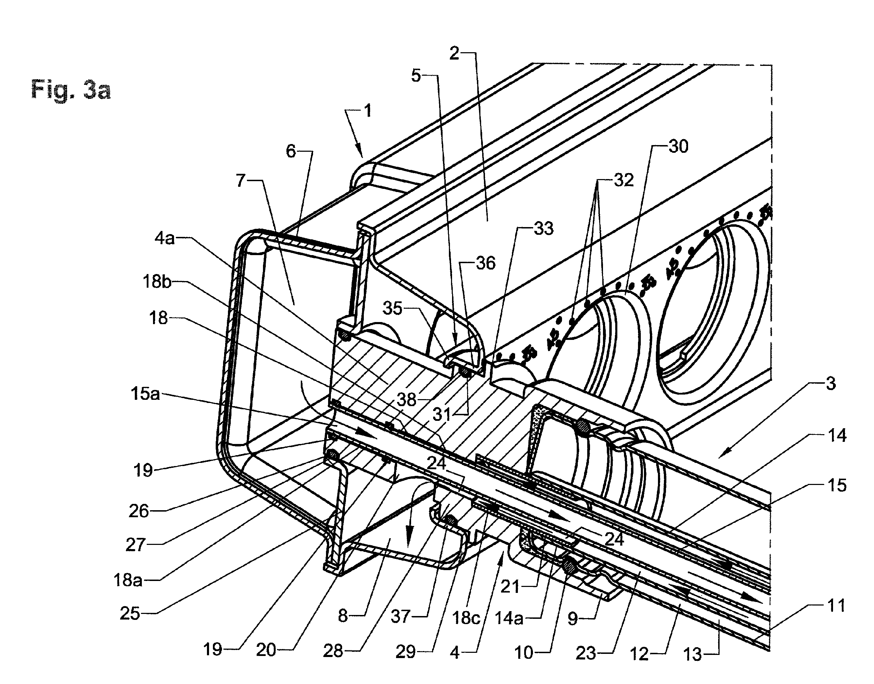

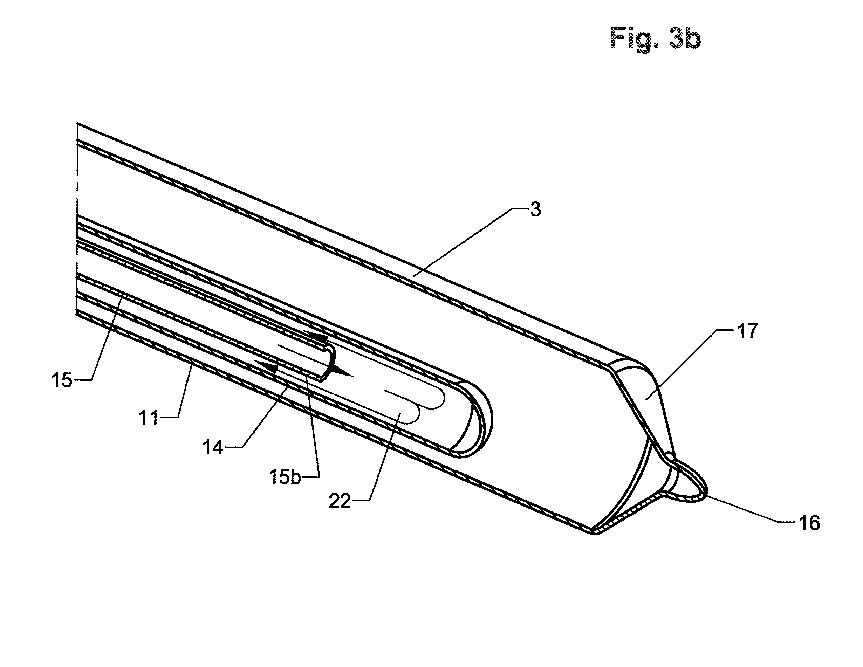

Das zu erwärmende Wasser tritt durch einen Einlaßstutzen 39 in den Verteilerkanal 7 der Verteiler-Sammlereinheit 2 ein, fließt in der in den Figuren 3a und 3b eingezeichneten Strömungsrichtung durch die Zuleitungsrohre 15 in die Absorberrohre 18 der Adapter 4, wird dort erwärmt, strömt dann in den Sammelkanal 8 der Verteiler-Sammlereinheit 2 zurück und tritt über den Auslaßstutzen 40 aus dieser aus.

Die Konstruktion des Solarkollektors 1 ist selbsttragend, d.h. es ist kein Halterahmen für die Kollektorröhren 3 erforderlich.

## Patentansprüche

1. Solarkollektor, mit an das Gehäuse einer Verteiler-Sammlereinheit angeschlossenen Kollektorröhren zum Erwärmen eines fluiden Mediums, insbesondere Wasser, **dadurch gekennzeichnet, daß** die Kollektorröhren (3) einen Adapter (4) mit einem Drehverschluß nach Art eines Bajonettverschlusses (5) zum Anschließen der Röhren (3) an einen Verteilerkanal (7) und einen Sammelkanal (8) des Gehäuses (6) der Verteiler-Sammlereinheit (2) und mit einer Drehverstellbarkeit zum Ausrichten der Kollektorröhren (3) nach der Sonnenstrahlung aufweisen.

2. Solarkollektor nach Anspruch 1, **dadurch gekennzeichnet, daß** in den äußeren Anschlußstutzen(9) des Adapters (4) eine Kollektorröhre (3) flüssigkeitsdicht eingesetzt ist, die aus einem für das Sonnenlicht durchlässigen äußeren, geschlossenen Hüllrohr (11) mit einem im unteren Rohrbereich (12) untergebrachten Reflektor (Reflektorbeschichtung 13), einem parallel zu und in dem Hüllrohr (11) angeordneten Absorberrohr (14), das mit dem Hüllrohr (11) einteilig ausgebildet und an den Sammelkanal (8) der Verteiler-Sammlereinheit (2) des Adapters (4) angeschlossen ist, sowie aus einem parallel zu, insbesondere koaxial zu und in dem Absorberrohr (14) angeordneten Zuleitungsrohr (15) für die zu erwärmende Flüssigkeit besteht, das an den Verteilerkanal (7) der Verteiler-Sammlereinheit (2) angeschlossen ist und in den äußeren geschlossenen Abschnitt (22) des Absorberrohres (14) mündet, der Adapter (4) den Sammelkanal (8) im Gehäuse (6) der Verteiler-Sammlereinheit (2) durchsetzt und in eine Öffnung (26) in der Trennwand (25) zwischen Verteilerkanal (7) und Sammelkanal (8) der Verteiler-Sammlereinheit (2) drehbar eingesetzt und gegen die Trennwand (25) mittels eines Dichtringes (27) abgedichtet ist und daß der Adapter (4) mit seinem mittleren Abschnitt (28) in eine entsprechende Öffnung (30) in der Außenwand (29) des Gehäuses (6) der Verteiler-Sammlereinheit (2) eingesetzt, gegen die Außenwand (29) mittels eines Dichtringes (31) abgedichtet, mit einem Bajonettverschluß (5) in der Außenwand (29) des Gehäuses (6) der Verteiler-Sammlereinheit (2) herausnehmbar befestigt und zum Ausrichten der Kollektorröhre (3) nach der Sonnenstrahlung über einen bestimmten Winkelbereich drehbar angeordnet ist.

3. Solarkollektor nach Anspruch 1 und 2, **dadurch gekennzeichnet, daß** das Hüllrohr (11) der Kollektorröhre (3) in den äußeren Anschlußstutzen (9) und den massiven Körper (4a) des Adapters (4) und das Zuleitungsrohr (15) der Kollektorröhre (3) in den Adapterkörper (4a) eingeklebt sind.

4. Solarkollektor nach einem der Ansprüche 1 bis 3, **gekennzeichnet durch** am Umfang der Einstecköffnungen (30) für die Adapter (4) mit den Kollektorröhren (3) auf der Außenwand (29) des Gehäuses (6) der Verteiler-Sammlereinheit (2) angebrachte Winkelskalen (32) und einen nach diesen einstellbaren Anzeiger (Nase 33) an den Adaptern (4).

5. Solarkollektor nach einem der Ansprüche 1 bis 4, **gekennzeichnet durch** an den Adaptern (4) angebrachte Handhabungen zum Ansetzen eines Werkzeugs für die Drehverstellung der Kollektorröhren (3).

6. Solarkollektor nach einem der Ansprüche 1 bis 5, **gekennzeichnet durch** Adapter (4) aus Metall, insbesondere Messing.

7. Solarkollektor nach einem der Ansprüche 1 bis 5, **gekennzeichnet durch** Adapter (4) aus Kunststoff.

8. Solarkollektor nach einem der Ansprüche 1 bis 7, **dadurch gekennzeichnet, daß** das Gehäuse (6) der Verteiler-Sammlereinheit (2) aus Metall hergestellt ist.

9. Solarkollektor nach einem der Ansprüche 1 bis 7, **dadurch gekennzeichnet, daß** das Gehäuse (6) der Verteiler-Sammlereinheit (2) aus Kunststoff besteht.
